# EUROPEAN PATENT APPLICATION

(11) **EP 2 311 892 A1**
(43) Date of publication of application: **20.04.2011**
(21) Application number: 09770005.8
(22) Date of filing: 06.06.2009
(51) Int. Cl.: C08G 59/50, C08J 5/24, C08K 5/18, C08K 5/29, C08L 63/00

(54) **EPOXY RESIN COMPOSITION AND PREPREG USING SAME**

(30) Priority: 25.06.2008 JP 2008165740
(71) Applicant: Toho Tenax CO., LTD., Tokyo 100-8585 (JP)
(72) Inventor: KAWAMOTO Hironori, Sunto-gun Shizuoka 411-8720 (JP); ISHIWATA Toyoaki, Sunto-gun Shizuoka 411-8720 (JP)
(74) Representative: Hallybone, Huw George
(86) International application number: PCT/JP2009/060397
(87) International publication number: WO 2009/157295

(57) **Abstract**

Disclosed is an epoxy resin composition comprising at least component [A]: a glycidyl-amino-group-containing polyfunctional epoxy resin, component [B]: an epoxy resin other than the component [A], component [C] : a polyisocyanate compound, component [D] : an aromatic-amine-based curing agent, and component [E]: a thermoplastic resin, **characterized in that** the epoxy resin composition has an epoxy group concentration of 0.67 to 1.51 Eq/kg of the total amount of the components [A] to [D], and preferably that the component [E] is in a proportion of 10 to 50% by weight of the total epoxy resin composition. Use of a prepreg having the resin composition as a matrix resin makes it possible to obtain a composite material with excellent heat resistance and wet heat resistance together with high mechanical properties.

## Description

### TECHNICAL FIELD

The present invention relates to a resin composition suitable for a prepreg for aircraft structural materials and to a prepreg for aircraft structural materials using the resin composition as a matrix resin. The invention also relates to a composite material using the prepreg, which has high wet heat resistance and impact resistance characteristics.

### BACKGROUND ART

Fiber-reinforced plastic (FRP) is a composite material made of a matrix resin, such as unsaturated polyester resin, epoxy resin, polyimide resin, or a like thermosetting resin or polyethylene, polypropylene, polyamide, polyphenylene sulfide (PPS), polyether ether ketone (PEEK), or a like thermoplastic resin, and a fiber-reinforced material made of carbon fibers, glass fibers, aramid fibers, etc. FRP is lightweight and has excellent strength characteristics, and thus has been widely applied in recent years from the aerospace industry to general industrial fields.

Generally, a matrix resin is dissolved in a solvent, then a curing agent and additives are added thereto, and a fiber-reinforced material such as cloth, mat, or roving is impregnated with the obtained mixture, thereby giving a prepreg, a molded intermediary substrate for FRP. Further, for example, in applications to aircrafts, in order to reduce the weight, a honeycomb sandwich panel using the prepreg as a faceplate is often used as a structural material. A honeycomb sandwich panel is usually produced by bonding the prepreg to each surface of a honeycomb core made of paper, aluminum, aramid, glass, or a like material.

In recent years, in order to reduce the weight of a honeycomb core and save the cost of molding, studies have been made on the molding of honeycomb sandwich panels, in which a resin for a prepreg is designed to have characteristics similar to an adhesive, so that there is no need to use an additional film-like adhesive for bonding the prepreg to the honeycomb core. For example, a method has been proposed, in which a polyisocyanate compound and an epoxy resin are pre-reacted to adjust the viscosity of a matrix resin, so that the molded fillet (a resin cured product formed between a prepreg faceplate and a honeycomb due to a part of the prepreg resin flowing) has a good configuration, whereby the resulting honeycomb sandwich panel has excellent mechanical properties (see Patent Document 1).

Meanwhile, in recent years, in applications to aircrafts, there have been attempts to apply resin compositions and prepregs, which may have the above characteristics, for other purposes than as honeycomb sandwich panels. However, particularly in applications as materials for aircrafts, a composite material obtained by the method of Patent Document 1, for example, has a problem in that its mechanical properties remarkably decrease under high-humidity and high-temperature conditions. Accordingly, there is a demand for further improvement in heat resistance/wet heat resistance, while maintaining the basic performance including impact resistance.

Patent Document 1: JP-A-2001-31838

### DISCLOSURE OF THE INVENTION

An object of the invention is to provide an epoxy resin composition for a structural material which has excellent wet heat resistance characteristics and exhibits excellent mechanical properties, especially rigidity and impact resistance, even in a high-humidity, high-temperature environment; and also a prepreg using the epoxy resin composition.

### MEANS FOR SOLVING THE PROBLEMS

The object of the invention mentioned above is achieved by the embodiments of the invention defined in the Claims, claims 1 to 14.

An embodiment of the invention as defined in claim 1 is an epoxy resin composition comprising at least the following components [A] to [E], **characterized in that** the epoxy resin composition has an epoxy group concentration of 0.67 to 1.51 Eq/kg of the total amount of the components [A] to [D].
Component [A] : Glycidyl-amino-group-containing polyfunctional epoxy resin
Component [B]: Epoxy resin other than the component [A]
Component [C]: Polyisocyanate compound
Component [D]: Aromatic-amine-based curing agent
Component [E]: Thermoplastic resin

An embodiment of the invention as defined in claim 2 is an epoxy resin composition according to claim 1, **characterized in that** the component [A] is in a proportion of 70 to 95% by weight of the combined total epoxy resin amount of the component [A] and the component [B].

An embodiment of the invention as defined in claim 3 is an epoxy resin composition according to claim 1 or 2, **characterized in that** the component [E] is in a proportion of 10 to 50% by weight of the total epoxy resin composition.

An embodiment of the invention as defined in claim 4 is an epoxy resin composition according to any one of claims 1 to 3, **characterized in that** a cured product obtained by curing the epoxy resin composition at 180°C for 2 hours has a dry glass transition temperature (Tg^{dry}) of 180°C or more.

An embodiment of the invention as defined in claim 5 is an epoxy resin composition according to any one of claims 1 to 4, **characterized in that** a cured product obtained by curing the epoxy resin composition at 180°C for 2 hours has a wet glass transition temperature (Tg^{wet}) of 150°C or more.

An embodiment of the invention as defined in claim 6 is prepreg comprising a fiber-reinforced material sheet impregnated with an epoxy resin composition, the epoxy resin composition including at least the following components [A] to [E] and having an epoxy group concentration of 0.67 to 1.51 Eq/kg of the total amount of the components [A] to [D].
Component [A] : Glycidyl-amino-group-containing polyfunctional epoxy resin
Component [B]: Epoxy resin other than the component [A]
Component [C]: Polyisocyanate compound
Component [D]: Aromatic-amine-based curing agent
Component [E]: Thermoplastic resin

An embodiment of the invention as defined in claim 7 is a prepreg according to claim 6, **characterized in that** the fiber-reinforced material sheet is a carbon fiber sheet.

An embodiment of the invention as defined in claim 8 is a prepreg according to claim 7, **characterized in that** the carbon fiber sheet is a unidirectional carbon fiber sheet or a woven carbon fiber sheet.

An embodiment of the invention as defined in claim 9 is a prepreg according to claim 6, **characterized in that** the fiber-reinforced material sheet is a woven sheet made of two or more kinds of fibers.

An embodiment of the invention as defined in claim 10 is a prepreg according to claim 6, **characterized in that** the prepreg has an epoxy resin composition content of 15 to 60% by weight.

An embodiment of the invention as defined in claim 11 is a prepreg according to claim 10, **characterized in that** a composite material obtained by molding/curing the prepreg using an autoclave under molding/curing conditions of 180°C, 2 hours, and 5 kgf/mm² has a dry glass transition temperature of 190°C or more.

An embodiment of the invention as defined in claim 12 is a prepreg according to claim 10 or 11, **characterized in that** a composite material obtained by molding/curing the prepreg using an autoclave under molding/curing conditions of 180°C, 2 hours, and 5 kgf/mm² has a wet glass transition temperature of 150°C or more.

An embodiment of the invention as defined in claim 13 is a prepreg according to any one of claims 10 to 12, **characterized in that** a composite material obtained by molding/curing the prepreg using an autoclave under molding/curing conditions of 180°C, 2 hours, and 5 kgf/mm² has a compression strength after impact (CAI) of 200 MPa or more.

An embodiment of the invention as defined in claim 14 is composite material obtained by molding and curing the prepreg of any one of the above claims 6 to 13.

### ADVANTAGE OF THE INVENTION

The prepreg using the epoxy resin composition of the invention as a matrix resin has excellent heat resistance and wet heat resistance. When layers of the prepreg are laminated and cured to produce a molded plate (composite material), the resulting product has high heat resistance and wet heat resistance together with excellent mechanical properties, such as impact resistance.

### BEST MODE FOR CARRYING OUT THE INVENTION

The epoxy resin composition of the invention includes, as essential constituents, at least the following components [A] to [E].

Component [A]: Glycidyl-amino-group-containing polyfunctional epoxy resin
Component [B] : Epoxy resin other than the component [A]
Component [C] : Polyisocyanate compound
Component [D] : Aromatic-amine-based curing agent
Component [E] : Thermoplastic resin

The glycidyl-amino-group-containing polyfunctional epoxy resin used as the component [A] of the invention refers to an epoxy resin having three or more epoxy groups. Specific examples thereof include N,N,N',N'-tetraglycidyl diaminodiphenylmethane (e.g., jER 604 manufactured by JAPAN EPOXY RESINS, Sumi-Epoxy ELM-434 manufactured by SUMITOMO CHEMICAL, Araldite MY 9634 and MY-720 manufactured by HUNTSMAN, and Epotohto YH 434 manufactured by TOHTO KASEI) and N,N,O-triglycidyl-p-aminophenol (e.g., Sumi-Epoxy ELM-100 and ELM-120 manufactured by SUMITOMO CHEMICAL and Araldite MY 0500 and MY 0600 manufactured by HUNTSMAN). These glycidyl-amino-group-containing polyfunctional epoxy resins may be used in combination of two or more kinds. In the invention, a glycidyl-amino-group-containing polyfunctional epoxy resin serves to provide a cured product with high heat resistance.

The epoxy resin other than the component [A] used as the component [B] of the invention is not limited and may be any of known epoxy resins other than the glycidyl-amino-group-containing polyfunctional epoxy resins for use as the component [A]. Specific examples thereof include polyfunctional epoxy resins, such as bisphenol-type epoxy resins, alcohol-type epoxy resins, hydrophthalic-acid-type epoxy resins, dimer-type epoxy resins, alicyclic epoxy resins, and like bifunctional epoxy resins, as well as phenol-novolac-type epoxy resins, cresol-novolac-type epoxy resins, and like novolac-type epoxy resins. Further, various modified epoxy resins, such as urethane-modified epoxy resins and rubber-modified epoxy resins, are also usable. Bisphenol-type epoxy resins, alicyclic epoxy resins, phenol-novolac-type epoxy resins, cresol-novolak-type epoxy resins, and urethane-modified bisphenol A epoxy resins are preferable.

Examples of bisphenol-type epoxy resins include bisphenol-A-type resins, bisphenol-F-type resins, bisphenol-AD-type resins, and bisphenol-S-type resins. More specific examples thereof include, as commercially available resins, jER 815, jER 828, jER 834, jER 1001, and jER 807 manufactured by JAPAN EPOXY RESINS, Epomik R-710 manufactured by MITSUI PETROCHEMICAL, and EXA 1514 manufactured by DIC.

Examples of alicyclic epoxy resins include, as commercially available resins, Araldite CY-179, CY-178, CY-182, and CY-183 manufactured by HUNTSMAN. Examples of phenol-novolac-type epoxy resins include jER 152 and jER 154 manufactured by JAPAN EPOXY RESINS, DEN 431, DEN 485, and DEN 438 manufactured by DOW CHEMICAL, and Epiclon N-740 manufactured by DIC. Examples of cresol-novolak-type epoxy resins include Araldite ECN 1235, ECN 1273, and ECN 1280 manufactured by HUNTSMAN and EOCN 102, EOCN 103, and EOCN 104 manufactured by NIPPON KAYAKU. Further, examples of urethane-modified bisphenol A epoxy resins include Adeka Resin EPU-6 and EPU-4 manufactured by ASAHI DENKA.

These epoxy resins may be suitably selected and used alone or in combination of two or more kinds. Of these, with respect to bifunctional epoxy resins such as bisphenol-type resins, there are various grades varying from liquids to solids depending on the molecular weight. When blended with a matrix resin for a prepreg, they can be suitably mixed to adjust the viscosity.

The polyisocyanate compound used as the component [C] of the invention is not limited as long as it is a compound having two or more isocyanate groups in the molecule and reacts with an epoxy resin to produce a thickening effect. The polyisocyanate compound used may be pre-reacted with the component [A] and/or component [B]. Such a pre-reaction has a suppressing effect on the hygroscopicity of the resulting resin composition, thereby suppressing performance degradation due to moisture absorption during the production, storage, and use of the prepreg. In addition, the pre-reaction also has a stabilizing effect on the viscosity of the resulting resin composition. The polyisocyanate compound serves to adjust the resin flow during molding/curing and improve moldability.

The aromatic-amine-based curing agent used as the component [D] of the invention serves as a curing agent for epoxy resins. Specific examples thereof include diaminodiphenylsulfone (DDS), diaminodiphenylmethane (DDM), diaminodiphenyl ether (DPE), and phenylenediamine. The aromatic-amine-based curing agent is not limited as long as it allows curing at 180°C, and may be any of known aromatic-amine-based curing agents. They may be used alone or in combination of two or more kinds. DDS is preferable for imparting heat resistance. The aromatic-amine-based curing agent may also be microencapsulated within a melamine resin or the like, for example. When the epoxy resin composition of the invention contains the aromatic-amine-based curing agent, a cured product of the epoxy resin composition can develop high heat resistance.

The thermoplastic resin used as the component [E] of the invention may be a thermoplastic resin such as polyethersulfone (PES) or polyetherimide (PEI). In addition, polyimide, polyamidoimide, polysulfone, polycarbonate, polyether ether ketone, polyamide such as nylon 6, nylon 12, and amorphous nylon, aramid, arylate, polyester carbonate, and the like are also usable. Of these, polyimide, polyetherimide (PEI), polyethersulfone (PES), polysulfone, and polyamidoimide can be mentioned as preferred examples in terms of heat resistance. Further, the thermoplastic resin for use in the resin composition of the invention may also be a rubber component. Typical examples of rubber components include rubber components such as carboxy-terminated styrene butadiene rubber and carboxy-terminated hydrogenated acrylonitrile butadiene rubber.

These thermoplastic resins may be used alone or in combination of two or more kinds in an arbitrary ratio. The form of the thermoplastic resin is not limited. In order to achieve uniform addition to the resin composition while maintaining moldability, it is preferably in the form of particles. Such thermoplastic resin particulates preferably have an average particle diameter within a range of 0.1 to 100 µm. An average particle diameter of less than 0.1 µm results in high bulk density. This may cause a remarkable increase in the viscosity of the resin composition or make it difficult to add a sufficient amount. Meanwhile, in the case where the average particle diameter is more than 100 µm, when the resulting resin composition is sheeted, it may be difficult to obtain a sheet shape with a uniform thickness. The average particle diameter is more preferably 1 to 50 µm. Such a thermoplastic resin may be insoluble or soluble in an epoxy resin (the component [A], the component [B], or a mixture thereof). When a soluble thermoplastic resin is used, the thermoplastic resin may be added in a completely undissolved state, a partially dissolved state, or a completely dissolved state. In terms of the moldability of the resin composition and the handleability of the prepreg, the thermoplastic resin is preferably added in a completely undissolved state or a partially dissolved state. A partially dissolved state is particularly preferable. The percentage of dissolution is not limited, and may be set at any desired percentage in consideration of the moldability of the resin composition, the prepreg handleability, etc., as mentioned above.

By blending the thermoplastic resin as above, a cured product obtained by curing the epoxy resin composition of the invention can exhibit improved impact resistance with little loss of heat resistance. Further, in addition to having the characteristics mentioned above, a thermoplastic resin soluble in an epoxy resin dissolves in an epoxy resin during the thermosetting resin curing process to increase the matrix viscosity, and thus is also effective in preventing loss of the viscosity of the epoxy resin composition. These thermoplastic resins may also be used in a state of being partially or completely dispersed in an epoxy resin (the component [A], the component [B], or a mixture thereof).

The epoxy resin composition of the invention includes the components [A] to [E] as essential constituents as above, and have an epoxy group concentration within a range of 0.67 to 1.51 Eq/kg of the total amount of the components [A] to [D] . When the epoxy value is less than 0.67, the resulting resin cured product or composite material have insufficient heat resistance. When the epoxy value is more than 1.51, the resulting resin cured product or composite material may have poor impact resistance, or this may results in a product with high hygroscopicity, whose physical properties vary greatly in hot, humid environments. It is preferably within a range of 0.70 to 1.40, still more preferably 0.73 to 1.2, and particularly preferably 0.75 to 1.10. The epoxy group concentration herein can be easily calculated from the epoxy equivalent (g/eq) of each of the epoxy resins used as the component [A] and the component [B], the loadings thereof, and the total weight of the components [A], [B], [C], and [D].

The resin composition of the invention includes the components [A], [B], [C], [D], and [E] mentioned above as essentials. If necessary, the resin composition may also suitably contain various additives such as curing agents other than the component [D], accelerators, thermosetting resins, reactive diluents, fillers, antioxidants, flame retarders, and pigments to the extent that they do not interfere with the advantages of the invention. Examples of curing agents other than the component [D] and/or accelerators for epoxy resins include anhydrides, Lewis acids, dicyandiamide (DICY), imidazoles, and like basic curing agents, urea compounds, and organic metal salts. More specifically, examples of anhydrides include phthalic anhydride, trimellitic anhydride, and pyromellitic dianhydride. Examples of Lewis acids include boron trifluoride salts, more specifically including BF₃ monoethyl amine and BF₃ benzylamine. Examples of imidazoles include 2-ethyl-4-methylimidazole, 2-ethylimidazole, 2,4-dimethylimidazole, and 2-phenylimidazole. Further, 3-[3,4-dichlorophenyl]-1,1-dimethylurea (DCMU), a urea compound, and Co [III] acetylacetonate, an organic metal salt, can also be mentioned, for example. Examples of reactive diluents include polypropylene diglycol/diglycidyl ether, phenyl glycidyl ether, are like reactive diluents.

The following describes the loadings of the components [A], [B], [C], [D], and [E] for use in the epoxy resin composition of the invention. With respect to the loading of the component [A] used in the invention, in order to improve heat resistance, it is preferable that the proportion of the component [A] is 70 to 95% by weight of the combined total epoxy resin amount of the component [A] and the component [B]. When the proportion of the component [A] is less than 70% by weight, the resulting cured product or composite material may have insufficient heat resistance. When the proportion is higher than 95% by weight, the resulting cured product or composite material may have insufficient impact resistance. It is preferably 70 to 93% by weight, still more preferably 72 to 90% by weight, and particularly preferably 75 to 90% by weight.

The loading of the component [C] used in the invention is not limited and can be suitably selected without affecting handleability, etc., from a standpoint of resin composition production, prepreg production, and composite material production. A preferred range is, for example, about 0.1 to about 15% by weight of the combined total epoxy resin amount of the component [A] and the component [B]. When the loading is less than 0.1% by weight, a thickening effect on the resin composition, which is expected to result from the addition, will be insufficient. A loading of more than 15% by weight provides the prepreg with reduced tack and drape. This may impair the handleability of the prepreg or cause foaming during curing, or may further decrease the tenacity of the cured product. It is preferably 0.5 to 10% by weight, and still more preferably 1 to 7% by weight.

The loading of the component [D] used in the invention may be a desired loading suitably determined considering the presence or absence of a curing agent other than the component [D]/an accelerator, the amounts thereof, the chemical reaction stoichiometry with an epoxy resin, the curing rate of the composition, etc.

The loading of the component [E] used in the invention is preferably 10 to 50% by weight of the total amount of the components [A], [B], [C], [D], and [E], i.e., the total amount of the epoxy resin composition. When the loading of the component [E] is less than 10% by weight, the resulting prepreg and composite material have insufficient impact resistance. A loading of more than 50% by weight may provide the resin composition with increased viscosity and poor moldability/handleability. It is preferably 12 to 45% by weight, and still more preferably 13 to 40% by weight.

The method for producing the epoxy resin composition of the invention is not limited, and may be any of known methods. For example, the kneading temperature applied during the production of the resin composition may be within a range of 10 to 160°C. A temperature of more than 160°C allows epoxy resins to undergo thermal degradation or partial curing, and this may cause a decrease in the storage stability of the resulting resin composition or the prepreg using the same. A temperature of less than 10°C provides the resin composition with increased viscosity, and it may be practically difficult to perform kneading. It is preferably within a range of 20 to 130°C, and still more preferably 30 to 110°C.

As a kneading mechanical apparatus, a known mechanical apparatus may be used. Specific examples thereof include a roll mill, a planetary mixer, a kneader, an extruder, a Banbury mixer, a mixing vessel equipped with a stirring blade, and a horizontal mixing bath. Components may be kneaded in air or in an inert gas atmosphere. Especially when kneading is performed in air, an atmosphere having a controlled temperature and a controlled humidity is preferable. As a non-limiting example, kneading is preferably performed at a constant controlled temperature of 30°C or less or in a low-humidity atmosphere having a relative humidity of 50% RH or less.

The components may be kneaded in one step. Alternatively, it is also possible to add the components one by one to perform kneading in a multi-step manner. When the components are added one by one, they may be added in any order. In particular, as mentioned above, the component [C] used may be pre-reacted with the components [A] and/or [B]. Further, the component [E] may be partially or completely pre-dissolved in the components [A] and/or [B] and then used. The order of kneading/addition is not limited. However, in terms of the storage stability of the resulting resin composition and the prepreg made thereof, it is preferable to add the component [D] in last.

By using the thus-configured epoxy resin composition of the invention, a cured product with excellent wet heat resistance is obtained. Of such resin compositions, a preferred resin composition is such that a cured product obtained by curing the resin composition by heating at 180°C for 2 hours has a dry glass transition temperature (Tg^{dry}) of 180°C or more, and more preferably 190°C or more. The dry glass transition temperature (Tg^{dry}) herein is Tg measured after conditioning the cured product in an atmosphere of 20°C and 50% RH for 40 hours or more. More specifically, a specimen with a length of 50 mm, a width of 6 mm, and a thickness of 2 mm is cut from a cured product obtained by curing the resin composition at 180°C for 2 hours. The specimen is conditioned in an atmosphere of 20°C and 50% RH for 40 hours or more, and then the cured resin composition is subjected to measurement under stress applied by three-point bending using a DMA analyzer (Rheogel-E4000 manufactured by UBM) at a temperature rise rate of 3°C/min and a frequency of 1 Hz. The loss viscoelasticity (E") peak temperature obtained thereby is defined as the dry glass transition temperature (Tg^{dry}) (evaluation standard: according to EN 6032).

Further, a particularly preferred resin composition is such that a cured product obtained by curing the epoxy resin composition by heating at 180°C for 2 hours has a wet glass transition temperature (Tg^{wet}) of 150°C or more, and more preferably 155°C or more. The wet glass transition temperature (Tg^{wet}) herein is Tg after exposure to an atmosphere of 70°C and 85% RH for 14 days. More specifically, in the same manner as described above for the dry glass transition temperature (Tg^{dry}), a specimen for Tg measurement is produced. The specimen is exposed to an atmosphere of 70°C and 85% RH for 14 days, then removed, and immediately subjected to three-point bending using a DMA to measure the glass transition temperature in the same manner as described above for the glass transition temperature (Tg^{dry}) . The value obtained thereby is defined as the wet glass transition temperature (Tg^{wet}).

The following will describe a prepreg according to another embodiment of the invention. The prepreg of the invention is a prepreg obtained by impregnating a fiber-reinforced material sheet with the epoxy resin composition of the invention having excellent wet heat resistance obtained as above. Examples of fiber-reinforced materials for the prepreg of the invention include carbon fibers, glass fibers, aromatic polyamide fibers, polyimide fibers, polybenzoxazole fibers, and wholly aromatic polyester fibers. They may be used alone or in combination of two or more kinds. As a non-limiting example, in order to improve the mechanical properties of the composite material, it is preferable to use carbon fibers which have excellent tensile strength. The fiber-reinforced material may be in the form of a fabric, a sheet formed by unidirectionally orienting fiber bundles, etc.

It is preferable that in the prepreg of the invention, the content of the constituent epoxy resin composition (RC) is 15 to 60% by weight. When the resin content is less than 15% by weight, the resulting composite material may have pores or the like, causing a decrease in mechanical properties. When the resin content is more than 60% by weight, the reinforcing effect by reinforcing fibers may be insufficient, resulting in practically low mechanical properties relative to the weight. It is preferably within a range of 20 to 50% by weight, and more preferably within a range of 30 to 50% by weight. The epoxy resin composition content (RC) herein is a proportion calculated from the weight change during the decomposition of the resin in the prepreg by sulfuric acid decomposition. More specifically, the epoxy resin composition content is obtained as follows. A specimen with a size of 100 mm x 100 mm is cut from a prepreg. The specimen is weighed, immersed or boiled in sulfuric acid until the resin content is eluted, and then filtered. The remaining fibers are washed with sulfuric acid and dried, and the mass thereof is measured. Calculation is then performed, and the epoxy resin composition content is thus obtained.

As a non-limiting example of a preferred, specific form of the prepreg, the prepreg may comprise a reinforcing fiber sheet, which is formed of reinforcing fiber layers and impregnated with a resin composition sandwiched therebetween, and a resin coating layer, which is formed over the surface of the reinforcing fiber sheet and has a thickness of 2 to 50 µm, for example. When the thickness is less than 2 µm, this may result in insufficient tack, causing a remarkable decrease in the molding processability of the prepreg. When the thickness is more than 50 µm, this may make it difficult to wind the prepreg into a roll form with a uniform thickness, causing a remarkable decrease in molding accuracy. It is more preferably 5 to 45 µm, and still more preferably 10 to 40 µm.

Of such prepregs, a preferred prepreg is such that a composite material obtained by molding/curing the prepreg using an autoclave under molding/curing conditions of 180°C, 2 hours, and 5 kgf/mm² has a dry glass transition temperature (Tg^{dry}) of 190°C or more, more preferably 200°C or more, and particularly preferably 210°C or more. The dry glass transition temperature (Tg^{dry}) herein is Tg measured after conditioning a prepreg molded/cured product in an atmosphere of 20°C and 50% RH for 40 hours or more. More specifically, layers of a prepreg molded product are laminated in the direction of 0° and cured at 180°C for 2 hours to give a cured product, and a specimen with a length of 50 mm, a width of 6 mm, and a thickness of 2 mm is cut from the obtained cured product. The specimen is conditioned in an atmosphere of 20°C and 50% RH for 40 hours or more, and then the cured resin composition is subjected to measurement under stress applied by three-point bending using a DMA analyzer (Rheogel-E4000 manufactured by UBM) at a temperature rise rate of 3°C/min and a frequency of 1 Hz. The loss viscoelasticity (E") peak-top temperature obtained thereby is defined as the dry glass transition temperature (Tg^{dry}) (evaluation standard: according to EN 6032).

A particularly preferred prepreg is such that a molded/cured product obtained from the prepreg using an autoclave under molding/curing conditions of 180°C, 2 hours, and 5 kgf/mm² has a wet glass transition temperature (Tg^{wet}) of 150°C or more, more preferably 155°C or more, and still more preferably 160°C or more. The wet glass transition temperature (Tg^{wet}) herein is Tg after exposure to an atmosphere of 70°C and 85% RH for 14 days. More specifically, in the same manner as described above for the dry glass transition temperature (Tg^{dry}), a specimen for Tg measurement is produced. The specimen is exposed to an atmosphere of 70°C and 85% RH for 14 days, then removed, and immediately subjected to three-point bending using a DMA to measure the glass transition temperature in the same manner as in the case of the glass transition temperature (Tg^{dry}) . The value obtained thereby is defined as the wet glass transition temperature (Tg^{wet}).

Further, a particularly preferred prepreg is such that a composite material obtained by molding/curing the prepreg using an autoclave under molding/curing conditions of 180°C, 2 hours, and 5 kgf/mm² has a compression strength after impact (CAI) of 200 MPa or more, more preferably 230 MPa or more, and particularly preferably 250 MPa or more. The compression strength after impact (CAI) herein is a value measured according to EN 6038.

The prepreg of the invention may be produced using any of known methods without limitation. Examples thereof include a so-called hot-melt method, in which the epoxy resin composition of the invention is applied in the form of a thin film onto a release paper, and the resulting resin film released therefrom is laminated and formed on a fiber-reinforced material (reinforcing fiber) sheet to impregnate the sheet with the epoxy resin composition, and a solvent method, in which the epoxy resin composition is prepared in the form of a varnish using a suitable solvent, and a fiber-reinforced material sheet is impregnated with the varnish. In particular, it is particularly preferable to produce the prepreg of the invention by the hot-melt method, a known production method.

The method for processing the epoxy resin composition of the invention into a resin film or sheet is not limited, and may be any of known methods. More specifically, it can be obtained by casting on a substrate, such as a release paper or a film, by die extrusion, an applicator, a reverse roll coater, a comma coater, etc. The resin temperature during film or sheet formation can be suitably set depending on the composition/viscosity of the resin. The same conditions as the kneading temperature in the resin composition production method mentioned above can be advantageously used.

The fiber-reinforced material sheet herein refers to one form of the fiber-reinforced material, and is reinforcing fibers in the form of a sheet, such as a fabric, a unidirectionally oriented product, or the like. The fiber-reinforced material sheet and the resin film or sheet are not limited in size, etc. However, in the case of continuous production, in terms of productivity, the width thereof is preferably 30 cm or more. Although no upper limit is set, it is practically 5 m. A size of more than 5 m may decrease production stability. Further, in the case of continuous production, the production rate is not limited. However, in terms of productivity, economical efficiency, etc., the production rate is not less than 0.1 m/min, more preferably not less than 1 m/min, and still more preferably not less than 5 m/min.

With respect to the impregnation pressure application for the impregnation of the fiber-reinforced material sheet with a resin sheet, any pressure may be employed considering the viscosity/resin flow of the resin composition, etc. The temperature of the resin sheet for the impregnation of the fiber-reinforcedmaterial sheet is within a range of 50 to 150°C. When the temperature is less than 50°C, the viscosity of the resin sheet is high, and such a resin sheet may not sufficiently impregnate into the fiber-reinforced material sheet. When the temperature is more than 150°C, this may initiate a curing reaction of the resin composition, resulting in a decrease in the storage stability or drape of the prepreg. It is preferably 60 to 145°C, and more preferably 70 to 140°C. The impregnation does not have to be done at once, and may be performed in two or more steps at arbitrary pressures and temperatures in a multi-step manner.

A composite material, which is formed by molding such as lamination and curing using the thus-obtained prepreg, has high wet heat resistance and excellent impact resistance, and is particularly suitable for application to an aircraft structural material.

### EXAMPLES

Hereinafter, the invention will be described in more detail through examples. In the Examples and Comparative Examples, tests on resin compositions were performed in the following manner.

### (1) Minimum Viscosity during Curing

The viscosity of each resin composition was measured by a soliquid meter MR-500 manufactured by RHEOLOGY. The measurement was conducted using 40-mm-diameter parallel plates at a temperature rise rate of 2°C/min and a frequency of 1 Hz with a plate gap of 0.5 mm (evaluation standard: according to EN 6043).

### (2) Glass Transition Temperature (Tg^{dry})

Each resin composition was cured at 180°C for 2 hours. A specimen with a length of 50 mm, a width of 6 mm, and a thickness of 2 mm was cut from the obtained cured product. The specimen was conditioned in an atmosphere of 20°C and 50% RH for 40 hours or more, and then the cured resin composition was subjected to measurement under stress applied by three-point bending using a DMA analyzer (Rheogel-E4000 manufactured by UBM) at a temperature rise rate of 3°C/min and a frequency of 1 Hz. For the evaluation of Tg, the peak top of loss viscoelasticity (E") is employed (evaluation standard: according to EN 6032).

### (3) Glass Transition Temperature after Moisture Absorbing Conditions (Tg^{wet})

In the same manner as in the case of the glass transition temperature (Tg^{dry}) described in (2) above, a specimen for Tg measurement was produced. The specimen was exposed to an atmosphere of 70°C and 85% RH for 14 days, then removed, and immediately subjected to three-point bending using a DMA to measure the glass transition temperature in the same manner as in the case of the glass transition temperature (Tg^{dry}) in (2).

### (4) Compression Strength after Impact

The evaluation of compression strength after impact was measured as an index of impact resistance according to EN 6038. Autoclave curing conditions: 180°C, 2 hours, 5 kgf/mm².

### [Examples 1 to 3]

jER 604 manufactured by JAPAN EPOXY RESINS was used as a glycidyl-amino-group-containing polyfunctional epoxy resin, the component [A]; jER 834 as an epoxy resin other than the component [A], the component [B]; MR 100 manufactured by NIPPON POLYURETHANE INDUSTRY as a polyisocyanate compound, the component [C]; 4, 4' -diaminodiphenylsulfone (4, 4' -DDS) manufactured by WAKAYAMA SEIKA as an aromatic-amine-based curing agent, the component [D]; and Sumika Excel PES 5003P manufactured by SUMITOMO CHEMICAL (average particle diameter: 10 µm) as a thermoplastic resin, the component [E].

The above materials were blended as follows to give the compositions shown in Table 1. First, the component [A] and the component [B] were heated/mixed in a kneader. To the obtained mixture was added the component [C], and the mixture was further heated and mixed in a kneader to knead the component [C] with the component [A] and the component [B]. Subsequently, the obtained resin mixture was transferred to a roll mill, and the component [D], the component [E], and other components were thoroughly kneaded therewith to give epoxy resin compositions of Examples 1 to 3. The Tg (°C) under dry conditions and Tg (°C) under wet conditions of each epoxy resin composition are shown in Table 1.

### [Comparative Examples 1 to 2]

The component [B] and the component [D] having compositions shown in Table 1 were heated/kneaded in a kneader. The component [A] and the component [C] were added to the mixture, and the mixture was further heated and mixed in a kneader to allow the component [C] to react with the component [A] and the component [B]. Subsequently, the obtained resin mixture was transferred to a roll mill, and the component [E] and other components were thoroughly kneaded therewith to give epoxy resin compositions having different volatile contents and viscosities. The epoxy resin compositions were evaluated in the same manner as in the above examples. The results are shown in Table 1.

**[Table 1]**

| | | Item | Examples | | | Comparative Examples | |
|---|---|---|---|---|---|---|---|
| | | | 1 | 2 | 3 | 1 | 2 |
| Resin Components | [A] | jER 604 | 95 | 80 | 70 | 40 | 30 |
| | [B] | jER 834 | 5 | 20 | 30 | 60 | 70 |
| | [C] | MR-100 | 3 | 3 | 3 | 3 | 3 |
| | [D] | 4,4'-DDS | 23 | 23 | 23 | 20 | 20 |
| | [E] | PES | 56 | 23 | 14 | 5 | 5 |
| | Others | DICY | 3 | 3 | 3 | 3 | 3 |
| | | DCMU | 0.6 | 0.6 | 0.6 | 0.6 | 0.6 |
| | [A]/([A] +[B]) x 100 (% by weight) | | 95 | 80 | 70 | 40 | 30 |
| | [E] Content (% by weight) | | 30 | 15 | 10 | 4 | 4 |
| | Epoxy Group Concentration (Eq/kg) | | 1.200 | 0.904 | 0.802 | 0.613 | 0.567 |
| Evaluation | Dry Glass Transition Temperature (°C) | | 195 | 191 | 183 | 159 | 157 |
| | Wet Glass Transition Temperature (°C) | | 161 | 158 | 152 | 133 | 130 |

### [Examples 4 to 7]

The epoxy resin compositions of Examples 1 and 2 were used to produce prepregs according to the following procedure with the fiber areal weight (FAW) shown in Table 2. The resin composition obtained in Example 1 or 2 was cast at 60°C using a film coater to give a resin film. A unidirectionally oriented fiber-reinforced material (Fiber Areal Weight: 160±6 g/m²) of carbon fibers manufactured by TOHO TENAX, Tenax (trademark of TOHO TENAX) HTA-3K (E30), was impregnated with the resin film, thereby giving a prepreg. The fiber areal weight (FAW) and the resin content (RC) of each obtained prepreg are shown in Table 2.

Further, layers of the prepreg were laminated and molded into a composite material (molded plate) in an autoclave (curing conditions: 180°C, 2 hours, and 5 kgf/mm²). Table 2 shows the compression strength after impact (CAI) measured using each obtained molded plate. The Tg (°C) under dry conditions and Tg (°C) under wet conditions of each obtained molded plate are also shown in Table 2.

### [Comparative Examples 3 to 4]

The epoxy resin composition of Comparative Example 1 was used to produce prepregs according to the following procedure with the fiber areal weight (FAW) shown in Table 2. The resin composition obtained in Comparative Example 1 was cast at 60°C using a film coater to give a resin film. The same unidirectional fiber-reinforced material as in the above examples was impregnated with the resin film, thereby giving a prepreg. The fiber areal weight and the resin content of each obtained prepreg are shown in Table 2.

Further, layers of the prepreg were laminated and molded into a composite material (molded plate) in an autoclave (curing conditions: 180°C, 2 hours, and 5 kgf/mm²). Table 2 shows the compression strength after impact (CAI) measured using each obtained molded plate. The Tg (°C) under dry conditions and Tg (°C) under wet conditions of each obtained molded plate are also shown in Table 2.

As shown by the Examples and Comparative Examples, an epoxy resin composition of the invention has a Tg as high as 180°C or more under dry conditions and a Tg as high as 150°C or more under wet conditions. In addition, a composite material formed by molding using a prepreg obtained by impregnation with such an epoxy resin composition has excellent CAI including impact resistance, and can be suitably used as a structural material for aircrafts.

**[Table 2]**

| | Item | Examples | | | | Comparative Examples | |
|---|---|---|---|---|---|---|---|
| | | 4 | 5 | 6 | 7 | 3 | 4 |
| Prepreg | Carbon fiber | HTA -3K | HTA -3K | HTA -3K | HTA -3K | HTA -3K | HTA -3K |
| | Resin | Example 1 | Example 1 | Example 2 | Example 2 | Comparative Example 1 | Comparative Example 1 |
| | FAW (g/m²) | 158 | 157 | 158 | 162 | 159 | 160 |
| | RC (% by weight) | 40 | 20 | 43 | 60 | 42 | 10 |
| Composite Material | Dry Glass Transition Temperature (°C) | 219 | 208 | 216 | 214 | 153 | 148 |
| | Wet Glass Transition Temperature (°C) | 166 | 161 | 169 | 165 | 139 | 131 |
| | CAI (MPa) | 251 | 218 | 205 | 213 | 145 | 103 |

### INDUSTRIAL APPLICABILITY

The prepreg using the epoxy resin composition of the invention as a matrix resin has excellent wet heat resistance characteristics and exhibits excellent mechanical properties, especially rigidity and impact resistance, even in a high-humidity, high-temperature environment. The prepreg can be used, in particular, for aircraft structural materials.

## Claims

1. An epoxy resin composition comprising at least the following components [A] to [E]:
component [A]: a glycidyl-amino-group-containing polyfunctional epoxy resin;
component [B] : an epoxy resin other than the component [A];
component [C]: a polyisocyanate compound;
component [D]: an aromatic-amine-based curing agent;
and
component [E]: a thermoplastic resin, **characterized in that** the epoxy resin composition has an epoxy group concentration of 0.67 to 1.51 Eq/kg of the total amount of the components [A] to [D].

2. The epoxy resin composition according to claim 1, **characterized in that** the component [A] is in a proportion of 70 to 95% by weight of the combined total epoxy resin amount of the component [A] and the component [B].

3. The epoxy resin composition according to claim 1 or 2, **characterized in that** the component [E] is in a proportion of 10 to 50% by weight of the total epoxy resin composition.

4. The epoxy resin composition according to any one of claims 1 to 3, **characterized in that** a cured product obtained by curing the epoxy resin composition at 180°C for 2 hours has a dry glass transition temperature (Tg^{dry}) of 180°C or more.

5. The epoxy resin composition according to any one of claims 1 to 4, **characterized in that** a cured product obtained by curing the epoxy resin composition at 180°C for 2 hours has a wet glass transition temperature (Tg^{wet}) of 150°C or more.

6. A prepreg comprising a fiber-reinforced material sheet impregnated with an epoxy resin composition,
the epoxy resin composition including at least the following components [A] to [E]:
component [A]: a glycidyl-amino-group-containing polyfunctional epoxy resin;
component [B] : an epoxy resin other than the component [A];
component [C]: a polyisocyanate compound;
component [D]: an aromatic-amine-based curing agent;
and
component [E]: a thermoplastic resin,
the epoxy resin composition having an epoxy group concentration of 0.67 to 1.51 Eq/kg of the total amount of the components [A] to [D].

7. The prepreg according to claim 6, **characterized in that** the fiber-reinforced material sheet is a carbon fiber sheet.

8. The prepreg according to claim 7, **characterized in that** the carbon fiber sheet is a unidirectional carbon fiber sheet or a woven carbon fiber sheet.

9. The prepreg according to claim 6, **characterized in that** the fiber-reinforced material sheet is a woven sheet made of two or more kinds of fibers.

10. The prepreg according to claim 6, **characterized in that** the prepreg has an epoxy resin composition content of 15 to 60% by weight.

11. The prepreg according to claim 10, **characterized in that** a composite material obtained by molding/curing the prepreg using an autoclave under molding/curing conditions of 180°C, 2 hours, and 5 kgf/mm² has a dry glass transition temperature of 190°C or more.

12. The prepreg according to claim 10 or 11, **characterized in that** a composite material obtained by molding/curing the prepreg using an autoclave under molding/curing conditions of 180°C, 2 hours, and 5 kgf/mm² has a wet glass transition temperature of 150°C or more.

13. The prepreg according to any one of claims 10 to 12, **characterized in that** a composite material obtained by molding/curing the prepreg using an autoclave under molding/curing conditions of 180°C, 2 hours, and 5 kgf/mm² has a compression strength after impact (CAI) of 200 MPa or more.

14. A composite material obtained by molding and curing using the prepreg of any one of claims 6 to 13.
